# EUROPEAN PATENT APPLICATION

(11) **EP 4 435 426 A1**
(43) Date of publication of application: **25.09.2024**
(21) Application number: 22895141.4
(22) Date of filing: 02.06.2022
(51) Int. Cl.: G01N 27/62, H01J 49/00, H01J 49/06, H01J 49/10, H01J 49/42

(54) **INDUCTIVELY COUPLED PLASMA MASS SPECTROMETER**

(30) Priority: 17.11.2021 JP 2021186854
(71) Applicant: SHIMADZU CORPORATION, Kyoto-shi, Kyoto 604-8511 (JP)
(72) Inventor: MATSUSHITA, Tomoyoshi, Kyoto-shi, Kyoto 604-8511 (JP); FUJITA, Ryo, Kyoto-shi, Kyoto 604-8511 (JP); TANIGUCHI, Junichi, Kyoto-shi, Kyoto 604-8511 (JP)
(74) Representative: Müller-Boré & Partner Patentanwälte PartG mbB
(86) International application number: PCT/JP2022/022452
(87) International publication number: WO 2023/089852

(57) **Abstract**

One mode of ICP-MS according to the present invention includes: an ion source (5) configured to ionize a sample component by an inductively coupled plasma ionization method; a vacuum chamber (3) into which generated ions are introduced; a cell (10) disposed inside the vacuum chamber and configured to bring the ions into contact with a predetermined gas; a mass spectrometer unit (16) which is disposed at a later stage of the vacuum chamber and configured to perform mass spectrometry of ions having passed through the cell or ions derived from the ions; a first gas introduction unit (23) configured to introduce a predetermined gas into the cell; a second gas introduction unit (24) configured to introduce a predetermined gas into the vacuum chamber and outside the cell; and controllers (20, 22) configured to control gas introduction such that a gas is introduced by the first gas introduction unit when analysis is performed while bringing a gas into contact with ions in the cell, whereas a gas is introduced by the second gas introduction unit when analysis is performed without bringing a gas into contact with ions in the cell. As a result, it is possible to reduce the drift of the signal at the time of switching between the collision measurement mode and the non-collision measurement mode.

## Description

### TECHNICAL FIELD

The present invention relates to an inductively coupled plasma mass spectrometer.

### BACKGROUND ART

An inductively coupled plasma (hereinafter, referred to as "ICP") mass spectrometer (hereinafter, referred to as "ICP-MS") which includes the ICP ion source as an ion source is often used for analyzing a plurality of metals contained in minimal amounts in a sample at one time.

As the ICP-MS, there is known an ICP-MS with a collision cell in order to reduce the influence of interference ions derived from argon used for generating plasma in an ICP ion source, carbon generated in plasma, or the like. For example, in the ICP-MS described in Patent Literature 1, a collision cell is provided in an intermediate vacuum chamber into which ions are introduced through a sampling cone, and He gas is introduced into the collision cell at the time of analysis.

Ions injected into the collision cell frequently come in contact with the He gas, and the kinetic energy of those ions is reduced. An interference ion is usually a polyatomic ion having a collision cross-sectional area larger than that of an ion to be observed having the same mass which is usually an element ion. Accordingly, interference ions come in contact with the He gas more frequently than the element ions to be observed, and thus the kinetic energy of the interference ions decreases more easily. In view of this situation, while ions having the kinetic energy larger than or equal to a predetermined value are allowed to pass, forming a potential barrier at an ejection port of the collision cell blocks ions having the kinetic energy smaller than the predetermined value are blocked, thereby the interference ions can be separated and removed from the element ions to be observed.

Hereinafter, the ICP-MS including such a collision cell is simply referred to as ICP-MS.

### CITATION LIST

### PATENT LITERATURE

Patent Literature 1: JP 2020-91988 A

### SUMMARY OF INVENTION

### TECHNICAL PROBLEM

When the element to be analyzed is a light element such as lithium or beryllium, the kinetic energy is greatly reduced only by a small number of contacts with the He gas in the collision cell, and thus detection sensitivity is greatly reduced and the measurement cannot be effectively performed. On the other hand, such light elements are hardly disturbed by interference ions derived from argon, carbon, or the like, and thus it is not necessary to remove the interference ions in the first place. Therefore, when a large number of samples containing various elements having a wide atomic weight are sequentially and continuously analyzed, the analysis is often performed while alternately switching between a collision measurement mode in which He gas is introduced into the collision cell and a non-collision measurement mode in which He gas is not introduced into the collision cell.

However, in the course of performing various experiments for improving the performance of ICP-MS, the present inventors have found that a phenomenon of relatively large drift of the detection intensity is observed for a certain time immediately after the measurement mode is switched from the collision measurement mode to the non-collision measurement mode. Due to this phenomenon, it is sometimes difficult to accurately compare the data obtained in the collision measurement mode with the data obtained in the non-collision measurement mode. In addition, it is necessary after switching the measurement mode to wait for the certain time until the drift of the detection signal settles to some extent and acquire proper data, which wastes some of analysis time.

The present invention has been made to solve the above problems, and an object of the present invention is to provide an ICP-MS capable of reducing a drift of a detection signal generated when a collision measurement mode and a non-collision measurement mode are switched.

### SOLUTION TO PROBLEM

One mode of ICP-MS according to the present invention includes:
an ion source configured to ionize a sample component by an inductively coupled plasma ionization method;
a vacuum chamber into which ions generated by the ion source are introduced;
a cell disposed inside the vacuum chamber and configured to bring ions generated by the ion source into contact with a predetermined gas;
a mass spectrometer unit which is disposed at a later stage of the vacuum chamber and configured to perform mass spectrometry of ions having passed through the cell or other ions derived from the ions;
a first gas introduction unit configured to introduce a predetermined gas into the cell;
a second gas introduction unit configured to introduce a predetermined gas into the vacuum chamber and outside the cell; and
a controller configured to control gas introduction by the first and second gas introduction units such that a predetermined gas is introduced by the first gas introduction unit when analysis is performed while bringing a gas into contact with ions in the cell, whereas a predetermined gas is introduced by the second gas introduction unit when analysis is performed without bringing a gas into contact with ions in the cell.

### ADVANTAGEOUS EFFECTS OF INVENTION

In the above mode of the ICP-MS according to the present invention, the predetermined gas is present in the vacuum chamber at an appropriate concentration not only when the analysis is performed while the predetermined gas is in contact with the ions in the cell (for example, collision measurement mode) but also when the analysis is performed without bringing the predetermined gas into contact with the ions in the cell (for example, non-collision measurement mode). The predetermined gas present in the vacuum chamber can prevent passage of unnecessary particles such as unnecessary ions, radicals, and molecules derived from plasma gas or the like introduced into the vacuum chamber in a large amount from the ion source together with ions derived from the sample component.

Thus, according to the above mode of the ICP-MS of the present invention, in both the collision measurement mode and the non-collision measurement mode, it is possible to reduce the collision of unnecessary particles such as unnecessary ions and radicals derived from the plasma gas or the like to the mass spectrometer unit disposed at the later stage of the vacuum chamber. As a result, charge-up of the ion optical element constituting the mass spectrometer unit can be reduced, and the drift of the detection signal due to the influence can be suppressed.

### BRIEF DESCRIPTION OF DRAWINGS

[Fig. 1] Fig. 1 is a schematic configuration diagram of the ICP-MS according to an embodiment of the present invention.
[Fig. 2] Fig. 2 is an explanatory diagram of behavior of He gas in a collision measurement mode in the ICP-MS of the present embodiment.
[Fig. 3] Fig. 3 is an explanatory diagram of behavior of He gas in a non-collision measurement mode in the ICP-MS of the present embodiment.

### DESCRIPTION OF EMBODIMENTS

### [Causes of drift during measurement mode switching]

First, a situation of the drift of the detection signal generated when the collision measurement mode and the non-collision measurement mode are switched in the conventional ICP-MS and an estimated cause of the drift will be described.

The present inventors have experimentally confirmed that, in the conventional ICP-MS, when the continuous analysis in the collision measurement mode is switched to the continuous analysis in the non-collision measurement mode, a relatively large drift occurs in the detection signals of various elements for a while immediately after the switching. It has been found that this drift depends on the type of element, and generally the drift is larger for an element having a smaller atomic weight.

The present inventors have found that the cause of the above-described drift is mainly the surface potential state of the ion optical element (specifically, a pre-filter constituting the quadrupole mass filter) constituting the mass separation unit disposed at the later stage of the collision cell through experimental studies and simulation studies using an actual machine. The surface potential state referred to herein is a change in surface potential caused by charge-up that can be caused by collision of unnecessary ions, radicals, or the like other than the target element to be measured to the electrode.

In the collision measurement mode in the ICP-MS, the collision cell is filled with the He gas supplied into the collision cell, and the He gas flows out from the collision cell into the vacuum chamber outside the collision cell. Therefore, a relatively large amount of He gas is present in a space between the ion outlet of the collision cell and the quadrupole mass filter, and unnecessary ions and radicals coming out of the collision cell collide with the He gas and hardly reach the later stage pre-filter. As a result, charge-up of the pre-filter hardly occurs. On the other hand, in the non-collision measurement mode in the conventional ICP-MS, the He gas is not present in the space between the ion outlet of the collision cell and the quadrupole mass filter, and thus a large amount of unnecessary ions and radicals collide with the pre-filter. As a result, in the non-collision measurement mode, the pre-filter is likely to cause the charge-up, and when the charge-up occurs, the trajectory of the ion derived from the target element becomes unstable, and thus the detection signal is likely to fluctuate.

The charge-up phenomenon of the pre-filter as described above can appropriately explain the occurrence of signal drift immediately after switching from the collision measurement mode to the non-collision measurement mode. Therefore, in order to reduce this drift, even in the non-collision measurement mode, unnecessary ions, radicals, and the like may be set to hardly collide with the quadrupole mass filter including the pre-filter likely as in the collision measurement mode. The ICP-MS according to the present invention has been made based on such findings.

### [Configuration of ICP-MS of one embodiment]

Hereinafter, the ICP-MS according to an embodiment of the present invention is described, with reference to the drawings.

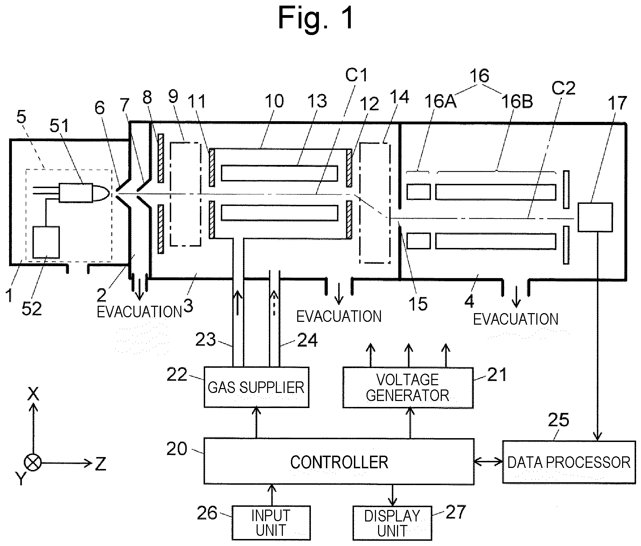

Fig. 1 is a schematic block configuration diagram of the ICP-MS according to the present embodiment. For convenience of explanation, three axes of X, Y, and Z which are orthogonal to each other are defined in the space, as shown in Fig. 1.

The ICP-MS includes: an ionization chamber 1 maintained at substantially atmospheric pressure atmosphere and electrically grounded; and three vacuum chambers such as a first vacuum chamber 2, a second vacuum chamber 3, and a third vacuum chamber 4. The degree of vacuum increases from the ionization chamber 1 toward the first vacuum chamber 2, the second vacuum chamber 3, and the third vacuum chamber 4, in this order. Although not shown, the interior of the first vacuum chamber 2 is evacuated by a rotary pump, and the interiors of the second vacuum chamber 3 and the third vacuum chamber 4 are evacuated by a vacuum pump combining a rotary pump and a turbo-molecular pump.

The ionization chamber 1 contains, in its interior, an ICP ion source 5. The ICP ion source 5 includes a plasma torch 51 that has a sample tube through which a liquid sample atomized by a nebulizing gas flows, a plasma gas tube formed on the outer periphery of the sample tube, and a cooled gas tube formed on the outer periphery of the plasma gas tube. At the inlet end of the sample tube of the plasma torch 51, an autosampler 52 for introducing the liquid sample into the plasma torch 51 is provided. Although not shown, the sample tube is connected by a nebulizing gas supply source configured to supply the nebulizing gas, the plasma gas tube is connected by a plasma gas supply source configured to supply a plasma gas such as an Ar gas, and the cooled gas tube is connected by a cooled gas supply source configured to supply a cooled gas.

The first vacuum chamber 2 is formed between a sampling cone 6 having a substantially conical shape, and a skimmer 7 also having the substantially conical shape like the sampling cone. The sampling cone 6 and the skimmer 7 each have an ion passing port at their respective tops. The first vacuum chamber 2 functions as an interface for sending ions supplied from the ICP ion source 5 to the later stage, and for discharging a solvent gas or the like.

Inside the second vacuum chamber 3, an attraction electrode 8, an ion lens 9 for converging ions, a collision cell 10, and an energy barrier forming electrode 14 are located in this order from the side close to the skimmer 7, i.e., the side from which ions are incident. The attraction electrode 8, a plurality of electrodes constituting the ion lens 9, and a plurality of electrodes constituting the energy barrier forming electrode 14 each are a disc-shaped electrode in which a substantially circular opening for allowing ions to pass through is formed. The ICP-MS employs a configuration of an axial shift optical system in which an ion optical axis C1 extending in the Z-axis direction at the outlet of the collision cell 10 and an ion optical axis C2 extending in the Z-axis direction at the inlet of a quadrupole mass filter 16 of the next stage are shifted in the X-axis direction. The energy barrier forming electrode 14 forms an energy barrier electric field, and also has a function of forming a deflection electric field for axial shift that bends the ion optical axis as illustrated in Fig. 1.

An inlet electrode 11 provided with an ion passing opening 11a is located in the inlet side of the collision cell 10, and an outlet electrode 12 provided with an ion passing opening 12a in the similar way as the inlet electrode 11 is located in the outlet side of the collision cell 10. Inside the collision cell 10, a multipole (for example, octupole) ion guide 13 including a plurality of rod electrodes provided in parallel to the Z-axis (ion optical axis C1) is provided.

The quadrupole mass filter 16 including a pre-filter 16A and a main filter 16B, and an ion detector 17 are disposed in the third vacuum chamber 4 communicating with the second vacuum chamber 3 through an ion passing opening 15.

A gas supplier 22 is connected to the collision cell 10 through a first gas supply tube 23, and communicates with the inside of the second vacuum chamber 3 (the outside of the collision cell 10) through a second gas supply tube 24. The gas supplier 22 can selectively supply a predetermined flow rate of collision gas to either the inside of the collision cell 10 or the outside of the collision cell 10 inside the second vacuum chamber 3, according to the control of a controller 20. The collision gas is generally a He gas, but may be another inert gas. In addition, the collision cell can be used as a reaction cell, and in this case, the gas supplier 22 supplies a reactive gas such as hydrogen or ammonia as a reaction gas.

The voltage generator 21 generates a predetermined voltage to be applied to each unit under the control of the controller 20. The controller 20 totally controls each unit such as the voltage generator 21 and the gas supplier 22 to perform the analysis, and has the function as a user interface via an input unit 26, a display unit 27, and the like. The data processor 25 includes an analog-digital (AD) convertor that digitizes detection signals obtained in the ion detector 17, and performs processing, such as processing on the collected data for creating a mass spectrum.

The entity of the controller 20 and the data processor 25 is a personal computer (PC) including a CPU, a RAM, an external storage device, and the like, and each function can be embodied by executing, by the PC, a predetermined computer program previously installed in the PC.

### [Specific operation of ICP-MS of one embodiment]

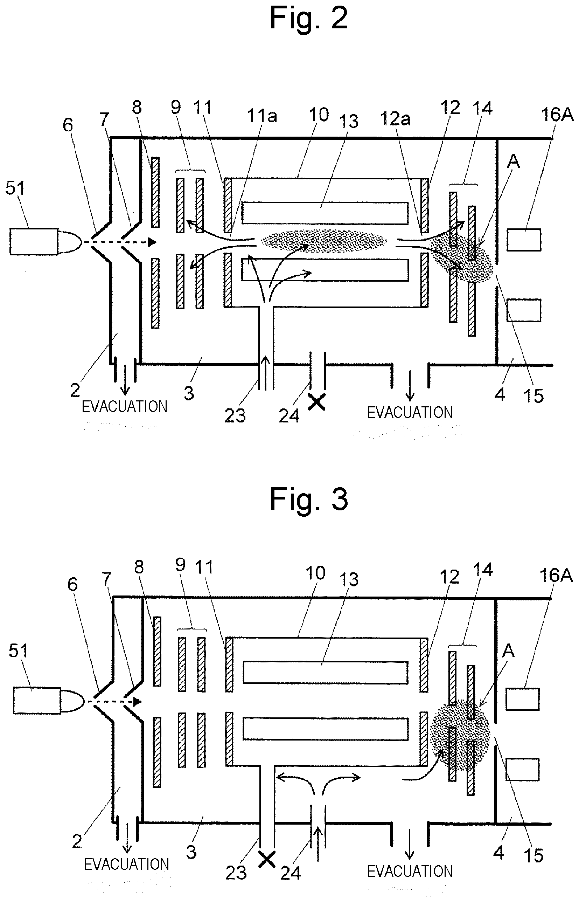

An analysis operation unique to the ICP-MS according to the present embodiment is described, with reference to Figs. 2 and 3. Under the control of the controller 20, the ICP-MS can selectively perform a collision measurement mode in which ions are brought into contact with collision gas in the collision cell 10 in order to remove interference ions, or a non-collision measurement mode in which such interference ions are not removed.

Fig. 2 is an explanatory diagram of the behavior of the collision gas in the collision measurement mode. Fig. 3 is an explanatory diagram of the behavior of the collision gas in the non-collision measurement mode.

When the collision measurement mode is executed, the gas supplier 22 continuously or intermittently supplies the He gas into the collision cell 10 through the first gas supply tube 23 under the control of the controller 20. The voltage generator 21 applies a predetermined voltage to each electrode (ion optical element) including the attraction electrode 8, the ion lens 9, the ion guide 13, and the energy barrier forming electrode 14.

When the liquid sample is nebulized from the autosampler 52 into the plasma formed in the plasma torch 51 of the ICP ion source 5, the elements contained in the liquid sample are ionized. Ions derived from the sample component generated in the ICP ion source 5 are introduced into the second vacuum chamber 3 through the sampling cone 6 and the ion passing port of the skimmer 7 together with undesired ions derived from plasma gas or the like. These ions are converged by the ion lens 9 and introduced into the collision cell 10 filled with the collision gas.

The ions repeatedly collide with the collision gas in the collision cell 10, and kinetic energy of the ions is attenuated. Ions having a larger collision cross-sectional area have more chances of collision with collision gas, and have larger attenuation of kinetic energy. Typically, the collision cross-sectional area of ions derived from the plasma gas or the like is larger than the collision cross-sectional area of ions derived from the sample component, and thus kinetic energy of unnecessary ions derived from the plasma gas or the like is greatly reduced as compared with ions derived from the sample component. Therefore, ions derived from the sample component easily get over the potential barrier formed outside the outlet of the collision cell 10, whereas unnecessary ions hardly get over the potential barrier. Unnecessary ions are removed by such a kinetic energy discrimination method, and ions mainly derived from the sample component can be passed through the ion passing opening 15 and guided to the third vacuum chamber 4. In addition, particles having no charge, such as radicals and molecules derived from plasma gas or the like, can pass through the collision cell 10, but such particles are not affected by the electric field, and thus they travel straight and are removed by the action of axial shift.

However, actually, the amount of particles (hereinafter, these are collectively referred to as "unnecessary particles") such as unnecessary ions, radicals, or molecules derived from the plasma gas or the like is much larger than the amount of ions derived from the sample component. Therefore, unnecessary particles cannot be completely removed by the kinetic energy discrimination method, the axial shift optical system, or the like as described above, and many unnecessary particles travel toward the ion passing opening 15 after passing through the collision cell 10. On the other hand, the collision cell 10 is substantially sealed, and thus the He gas supplied into the collision cell 10 flows out to the outside of the collision cell 10 through the ion passing openings 11a and 12a as indicated by arrows in Fig. 2. Most of the He gas is discharged by the vacuum pump, but the third vacuum chamber 4 has a higher degree of vacuum than the second vacuum chamber 3, and thus a part of the He gas travels toward the ion passing opening 15. Therefore, as illustrated in Fig. 2, a gas existing region A in which a relatively large amount of He gas exists is formed between the outlet of the collision cell 10 and the ion passing opening 15.

As described above, the unnecessary particles traveling toward the ion passing opening 15 pass through the gas existing region A, and thus easily collide with the He gas. Kinetic energy of the unnecessary particles passing through the gas existing region A is considerably lower than that before being introduced into the collision cell 10. Therefore, even if the particles come into contact with He gas having a small mass, the particles easily change their trajectories and are discharged by evacuation. As described above, the gas existing region A exists between the outlet of the collision cell 10 and the ion passing opening 15, and thus the unnecessary particles hardly enter the third vacuum chamber 4, and the chance of colliding with the pre-filter 16A is reduced.

The electrode constituting the pre-filter 16A is made of metal such as stainless steel, but a thin oxide film is formed on the surface of the electrode, and thus charge-up occurs when particles having charges collide. When the pre-filter 16A is charged up, the electric field near the inlet of the quadrupole mass filter 16 is disturbed, and the trajectory of the ions derived from the sample component to be incident on the quadrupole mass filter 16 becomes unstable. On the other hand, as described above, the chance for unnecessary particles to collide with the pre-filter 16A is reduced, and thus the charge-up of the pre-filter 16A is reduced, and it is possible to avoid that the ions derived from the sample component hardly enter the quadrupole mass filter 16.

In the conventional ICP-MS, the supply of the collision gas is stopped at all when executing the non-collision measurement mode in which the interference ions are not removed by the kinetic energy discrimination method. On the other hand, in the ICP-MS of the present embodiment, in the non-collision measurement mode, the gas supplier 22 continuously or intermittently supplies the He gas into the second vacuum chamber 3 through the second gas supply tube 24 according to the control of the controller 20. The amount of the He gas supplied at this time is desirably set appropriately according to the internal volume of the second vacuum chamber 3, the exhaust capacity of the vacuum pump, the shape of the ion optical element disposed in the second vacuum chamber 3, and the like, but can be, for example, about the same as in the collision measurement mode. As an example, the gas flow rate can be set to 3 to 10 sccm. The voltage generator 21 applies a predetermined voltage to each electrode including the attraction electrode 8, the ion lens 9, the ion guide 13, and the energy barrier forming electrode 14, just as in the collision measurement mode.

In the ICP ion source 5, ions derived from the sample component are generated as in the collision measurement mode, and are introduced into the second vacuum chamber 3 through the first vacuum chamber 2 together with undesirable ions derived from the plasma gas or the like. At this time, although there is no collision gas in the collision cell 10, various ions decrease kinetic energy when being captured by the electric field formed by the ion guide 13 and pass through the collision cell 10.

On the other hand, as shown in Fig. 3, the He gas is supplied into the second vacuum chamber 3, and most of the He gas is discharged along with evacuation by the vacuum pump. However, as described above, the degree of vacuum in the third vacuum chamber 4 is higher than that in the second vacuum chamber 3, and thus a part of the He gas travels toward the ion passing opening 15. Therefore, as in the collision measurement mode, a gas existing region A in which a relatively large amount of He gas exists is formed between the outlet of the collision cell 10 and the ion passing opening 15.

The unnecessary particles traveling toward the ion passing opening 15 after passing through the collision cell 10 pass through the gas existing region A, and thus easily collide with the He gas. Also in this case, kinetic energy of unnecessary particles reaching the gas existing region A is lower than that before the particles are introduced into the collision cell 10. Therefore, even if the particles come into contact with He gas having a small mass, the particles change their trajectories and are discharged by evacuation. As described above, in the ICP-MS of the present embodiment, the gas existing region A in which a large amount of He gas exists is formed between the outlet of the collision cell 10 and the quadrupole mass filter 16 in both the collision measurement mode and the non-collision measurement mode, and thus, unnecessary particles hardly collide with the pre-filter 16A. As a result, the charge-up of the pre-filter 16A is reduced in any measurement mode, and it is possible to avoid that the ions derived from the sample component hardly enter the quadrupole mass filter 16.

In the conventional ICP-MS, the gas existing region A is formed in the collision measurement mode, but the gas existing region A is not formed in the non-collision measurement mode. Therefore, unnecessary particles easily collide with the pre-filter 16A, and charge-up of the pre-filter 16A easily occurs. In contrast, in the ICP-MS of the present embodiment, the gas existing region A is formed in both the collision measurement mode and the non-collision measurement mode, and thus it is possible to reduce the charge-up of the pre-filter 16A. In addition, it is possible to reduce the difference in the charge-up state of the pre-filter 16A depending on the measurement mode. Thereby, the drift of the detection signal generated immediately after the measurement mode is switched can be reduced, and the difference in the temporal variation of the detection signal due to the difference in the measurement mode can also be reduced.

Forming the gas existing region A in the non-collision measurement mode can reduce the passing efficiency of ions derived from the element to be measured (particularly, the light element). However, according to the experiments of the present inventors, it is possible to suppress the decrease in sensitivity of ions derived from the target element to about several % or less at the gas flow rate of the above-described level. In order to reduce the influence of the sensitivity decrease, it is desirable to appropriately set the flow rate of the gas supplied into the second vacuum chamber 3 in the non-collision measurement mode.

The ICP-MS according to the aforementioned embodiment is a so-called single quadrupole mass spectrometer. Here, the configuration of a mass spectrometer unit can be appropriately changed. The ICP-MS according to the present invention can be, for example, a triple quadrupole mass spectrometer including an ICP ion source, a quadrupole-time-of-flight (Q-TOF) mass spectrometer including an ICP ion source, or the like.

In addition, each constituent element in the ICP-MS of the above embodiment can be replaced with a constituent element having a similar function of another known mode as appropriate.

In addition, in the ICP-MS of the above embodiment, the axial shift optical system is used at the later stage of the collision cell 10, but this is not essential. However, in a case where the axial shift is typically performed, the kinetic energy (speed) of particles such as ions is reduced in the axial shift optical system or the ion optical system before the axial shift optical system, thus providing an advantage of easily obtaining the effect of blocking the passing of unnecessary particles by the gas existing region A in the axial shift optical system.

The above embodiment and the modified example are included in the present invention as an example. It is apparent that any modification, change, or addition within the scope of the present invention is included in the scope of claims of the present application.

### [Various modes]

A person skilled in the art can understand that the previously described illustrative embodiments are specific examples of the following modes of the present invention.

(Clause 1) One mode of ICP-MS according to the present invention includes:
an ion source configured to ionize a sample component by an inductively coupled plasma ionization method;
a vacuum chamber into which ions generated by the ion source are introduced;
a cell disposed inside the vacuum chamber and configured to bring ions generated by the ion source into contact with a predetermined gas;
a mass spectrometer unit which is disposed at a later stage of the vacuum chamber and configured to perform mass spectrometry of ions having passed through the cell or ions derived from the ions;
a first gas introduction unit configured to introduce a predetermined gas into the cell;
a second gas introduction unit configured to introduce a predetermined gas into the vacuum chamber and outside the cell; and
a controller configured to control gas introduction by the first and second gas introduction units such that a predetermined gas is introduced by the first gas introduction unit when analysis is performed while bringing a gas into contact with ions in the cell, whereas a predetermined gas is introduced by the second gas introduction unit when analysis is performed without bringing a gas into contact with ions in the cell.

In the ICP-MS according to clause 1, the predetermined gas is present in the vacuum chamber at an appropriate concentration not only when the analysis is performed while the predetermined gas is in contact with the ions in the cell (for example, collision measurement mode) but also when the analysis is performed without bringing the predetermined gas into contact with the ions in the cell (for example, non-collision measurement mode). The predetermined gas present in the vacuum chamber can prevent passage of unnecessary particles such as ions and radicals derived from argon or the like introduced into the vacuum chamber in a large amount from the ion source together with ions derived from the sample component.

Thus, according to the ICP-MS of clause 1, in both the collision measurement mode and the non-collision measurement mode, it is possible to reduce the collision of unnecessary particles such as ions and radicals derived from the plasma gas or the like to the mass spectrometer unit disposed at the later stage of the vacuum chamber. As a result, the occurrence of charge-up of the ion optical element constituting the mass spectrometer unit can be reduced, and the drift of the detection signal due to the influence can be suppressed. In addition, it is possible to reduce a difference in temporal variation of the detection signal between a case where the interference ions are removed by the kinetic energy discrimination method and a case where the interference ions are not removed. In addition, there is no need to wait for data acquisition until the drift of the detection signal settles to some extent after switching the measurement mode, and there is also an effect or shortening the analysis time.

(Clause 2) The ICP-MS according to clause 1 may further include an axially shifted ion optical system between the cell and the mass spectrometer unit.

In an axially shifted ion optical system, in order to favorably deflect ions by an electrostatic field or the like, kinetic energy of ions is often reduced by the axially shifted optical system itself or an optical system in a preceding stage of the axially shifted optical system. Therefore, according to the ICP-MS or clause 2, when unnecessary ions derived from the plasma gas or the like come into contact with a predetermined gas, the unnecessary ions easily change their trajectories, and the effect of removing the unnecessary ions can be enhanced.

(Clause 3) In the ICP-MS according to clause 1 or 2, the mass spectrometer unit may be a quadrupole mass filter.

In the quadrupole mass filter, when an electrode located on the inlet side such as a pre-filter is charged up, the trajectory of an ion to be targeted tends to be unstable, and the detection signal tends to drift. On the other hand, according to the ICP-MS of clause 3, the charge-up of the electrode located on the inlet side of the quadrupole mass filter can be reduced, and thus the effect of reducing the drift of the detection signal can be sufficiently obtained.

### REFERENCE SIGNS LIST

- 1...: Ionization Chamber
- 2...: First Vacuum Chamber
- 3...: Second Vacuum Chamber
- 4...: Third Vacuum Chamber
- 5...: ICP Ion Source
- 51...: Plasma Torch
- 52...: Autosampler
- 6...: Sampling Cone
- 7...: Skimmer
- 8...: Attraction Electrode
- 9...: Ion Lens
- 10...: Collision Cell
- 11...: Inlet Electrode
- 12...: Outlet Electrode
- 11a, 12a...: Ion Passing Opening
- 13...: Ion Guide
- 14...: Energy Barrier Forming Electrode
- 15...: Ion Passing Opening
- 16...: Quadrupole Mass Filter
- 16A...: Pre-filter
- 16B...: Main Filter
- 17...: Ion Detector
- 20...: Controller
- 21...: Voltage Generator
- 22...: Gas Supplier
- 23...: First Gas Supply Tube
- 24...: Second Gas Supply Tube
- 25...: Data Processor
- 26...: Input Unit
- 27...: Display Unit

## Claims

1. An inductively coupled plasma mass spectrometer, comprising:
an ion source configured to ionize a sample component by an inductively coupled plasma ionization method;
a vacuum chamber into which ions generated by the ion source are introduced;
a cell disposed inside the vacuum chamber and configured to bring ions generated by the ion source into contact with a predetermined gas;
a mass spectrometer unit which is disposed at a later stage of the vacuum chamber and configured to perform mass spectrometry of ions having passed through the cell or other ions derived from the ions;
a first gas introduction unit configured to introduce a predetermined gas into the cell;
a second gas introduction unit configured to introduce a predetermined gas into the vacuum chamber and outside the cell; and
a controller configured to control gas introduction by the first and second gas introduction units such that a predetermined gas is introduced by the first gas introduction unit when analysis is performed while bringing a gas into contact with ions in the cell, whereas a predetermined gas is introduced by the second gas introduction unit when analysis is performed without bringing a gas into contact with ions in the cell.

2. The inductively coupled plasma mass spectrometer according to claim 1, further comprising an axially shifted ion optical system between the cell and the mass spectrometer unit.

3. The inductively coupled plasma mass spectrometer according to claim 1, wherein the mass spectrometer unit is a quadrupole mass filter.

4. The inductively coupled plasma mass spectrometer according to claim 2, wherein the mass spectrometer unit is a quadrupole mass filter.
